# EUROPÄISCHE PATENTANMELDUNG

(11) **EP 1 677 402 A2**
(43) Veröffentlichungstag der Anmeldung: **05.07.2006**
(21) Anmeldenummer: 05110804.1
(22) Anmeldetag: 16.11.2005
(51) Int. Cl.: H02H 3/08

(54) **Verfahren und Schaltungsanordnung zur Verstärkung der Eingangssignale eines elektronischen Überstromauslösers von Niederspannungs-Leistungsschaltern**

(30) Priorität: 17.11.2004 DE 102004056157
(71) Anmelder: SIEMENS AKTIENGESELLSCHAFT, 80333 München (DE)
(72) Erfinder: Driehorn, Thomas, 12249, Berlin (DE); Krauss, Andreas, 10825, Berlin (DE); Pancke, Andreas, 13507, Berlin (DE); Röhl, Wolfgang, 13503, Berlin (DE); Schiller, Manfred, 14169, Berlin (DE)

(57) **Zusammenfassung**

Verfahren und Schaltungsanordnung zur Verstärkung der Eingangssignale (E) eines elektronischen Überstromauslösers von Niederspannungs Leistungsschaltern.

Die Erfindung betrifft ein Verfahren und eine Schaltungsanordnung zur Verstärkung der Eingangssignale (E) eines elektronischen Überstromauslösers von Niederspannungs-Leistungsschaltern mit mehreren Operationsverstärkern (OP1,OPn) unterschiedlichen Verstärkungsgrades und in Höhe einer Referenzspannung begrenztem Aussteuerungsgrad, von deren Ausgängen jeweils einer wahlweise in Abhängigkeit vom Ausgangspegel der Operationsverstärker auf die Auslöseeinheit (M) des Überstromauslösers geschaltet wird.

Vorgeschlagen wird, dass die Eingänge aller übrigen Operationsverstärker jeweils auf das Potential der halben Referenzspannung (Uref/2) geschaltet werden.

Zu hohe Eingangspegel an den Operationsverstärkern (OP1...Opn) werden somit sofort unterdrückt und die Erholzeit verkürzt.

## Beschreibung

Verfahren und Schaltungsanordnung zur Verstärkung der Eingangssignale eines elektronischen Überstromauslösers von Niederspannungs-Leistungsschaltern

Die Erfindung betrifft ein Verfahren und eine Schaltungsanordnung zur Verstärkung der Eingangssignale eines elektronischen Überstromauslösers von Niederspannungs-Leistungsschaltern mit mehreren Operationsverstärkern unterschiedlichen Verstärkungsgrades und in Höhe einer Referenzspannung begrenztem Aussteuerungsgrad, von deren Ausgängen jeweils einer wahlweise in Abhängigkeit vom Ausgangspegel der Operationsverstärker auf die Auslöseeinheit des Überstromauslösers geschaltet wird.

Elektronische Überstromauslöser dienen zur Überwachung des Stromes in einem ein- oder mehrphasigen Netz hinsichtlich des Auftretens von Überströmen und Kurzschlussströmen. Je nach der Höhe eines unzulässig hohen, über Stromwandler gemessenen Stromes bewirkt der Überstromauslöser eine verzögerte oder unverzögerte Auslösung des Niederspannungs-Leistungsschalters. Die Eingangssignale für den elektronischen Auslöser werden den Stromwandlern entnommen. Als Stromwandler dienen beispielsweise Rogowskispulen, die zwar ein ungedämpftes Übertragungsverhalten aufweisen, deren Ausgangssignale aber nur eine geringe Leistung haben, so dass sie vor der Übergabe an eine Auslöseschaltung, die üblicherweise durch einen Mikroprozessor mit vorgeschaltetem A/D-Wandler realisiert wird, verstärkt werden müssen. Im Mikroprozessor wird das gemessene Stromsignal bei der A/D-Wandlung zu einer Referenzspannung ins Verhältnis gesetzt.

Bisher erfolgt die Verstärkung der Eingangssignale des elektronischen Auslösers über Operationsverstärker. Nachteilig tritt hierbei jedoch der begrenzte Dynamikumfang eines einzelnen Operationsverstärkers zutage, der jeweils auf den halben positiven sowie negativen Wert der Referenzspannung begrenzt werden muss, weil der nachfolgende A/D-Wandler höhere Werte nicht verarbeiten kann. Hohe Eingangspegel, wie sie bei großen Überströmen oder im Kurzschlussfall auftreten, müssen deshalb beschnitten werden, so dass sich kein ausreichend genaues Abbild des überwachten Netzstromes ergibt.

Es ist auch eine Lösung bekannt, nach der mehrere mit Operationsverstärkern aufgebaute Verstärker eingangsseitig parallel geschaltet sind. Die Operationsverstärker besitzen unterschiedliche Verstärkungsfaktoren und werden je nach der Höhe des Eingangspegels von dem Mikroprozessor über den Verstärkern nachgeordnete Schalter als Signalquellen ausgesucht.

Nachteilig hierbei sind die hohen Kosten für den Mehrfachaufbau und zum anderen die langen Erholzeiten von Operationsverstärkern, wenn diese in einem übersteuerten Bereich betrieben wurden.

Dem Kostennachteil kann man durch einen integrierten Aufbau der Operationsverstärker begegnen, bekannt als so genannter Application Specific Integrated Circuit (ASIC). Ein solcher ASIC ist zum Beispiel aus der US 6 560 084 B1, allerdings nur mit einem Operationsverstärker pro Phase, bekannt. Der dort beschriebene ASIC erlaubt eine verstellbare Verstärkung in den einzelnen Phasen und damit eine Anpassung an verschieden hohe Nennstrombereiche (rating).

Es bleibt bei einer Anordnung von mehreren parallelen Operationsverstärkern pro Phase der Nachteil der langen Erholungszeit nach einer Umschaltung auf die nächstkleinere Verstärkungsstufe aufgrund des Sättigungsverhaltens des Operationsverstärkers mit der höheren Verstärkungsstufe, so dass dieser nach erneutem Ansteuern bei der nächsten Taktzeit möglicherweise einen falschen Stromwert liefert.

Der Erfindung liegt die Aufgabe zugrunde, eine Möglichkeit anzugeben, mit der die Vorteile eines ASIC mit mehreren Operationsverstärkern genutzt werden können, die aber einen großen Dynamikumfang bezüglich der Ausgangssignale der Stromwandler hat.

Erfindungsgemäß wird die Aufgabe gelöst durch ein Verfahren gemäß Anspruch 1 sowie eine Schaltungsanordnung gemäß Anspruch 2. Geeignete Ausgestaltungen sind Gegenstand der Unteransprüche.

Danach werden die Eingänge aller der Operationsverstärker, die aktuell nicht auf die Auslöseeinheit des Überspannungsauslösers geschaltet sind, jeweils auf das Potential der halben Referenzspannung geschaltet.

Für eine geeignete Schaltungsanordnung ist vorgesehen, dass die Eingänge der Operationsverstärker über von der Auslöseeinheit betätigbare zweite Schalter an das Potential der halben Referenzspannung schaltbar sind.

Die Maßnahmen haben den Vorteil, dass die Erholzeiten der Operationsverstärker minimiert werden oder vollständig entfallen und dass sich alle nötigen Bauelemente wie Operationsverstärker, Schalter und die zur Einstellung des unterschiedlichen Verstärkungsgrades nötigen Spannungsteiler in einen ASIC integrieren lassen.

Das Verfahren soll anhand von zwei Ausführungsbeispielen noch näher erläutert werden. In den zugehörigen Zeichnungen zeigen:
- Figur 1: das Prinzip einer Schaltung eines elektronischen Überstromauslösers eines Niederspannungs-Leistungsschalters zum symmetrischen Anschluss an eine Rogowskispule;
- Figur 2: die gleiche Schaltung, allerdings mit einem unsymmetrischen Anschluss an die Rogowskispule und
- Figur 3: eine bisher bekannte Lösung.

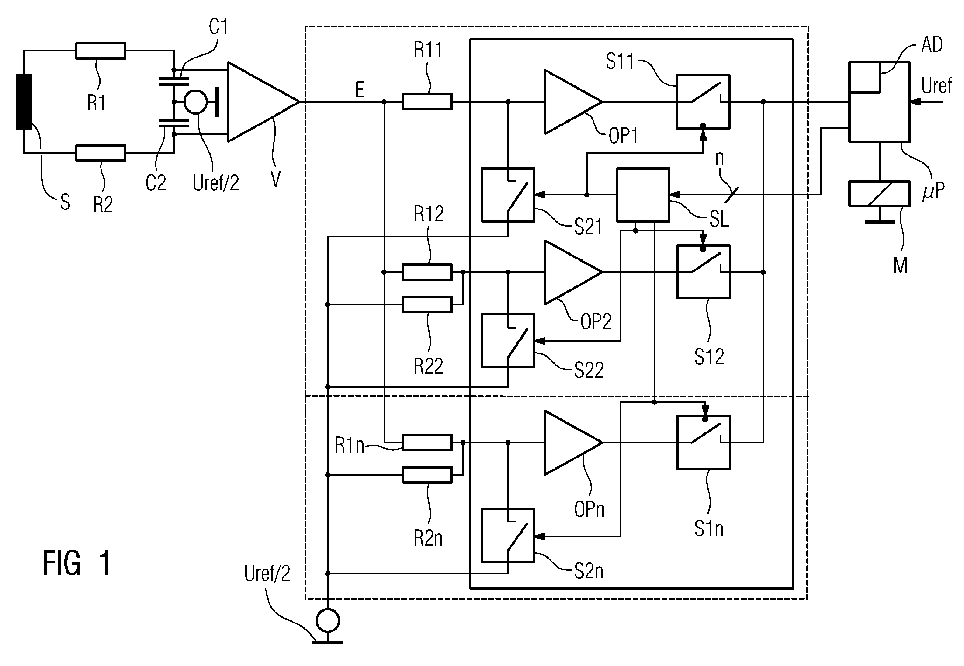

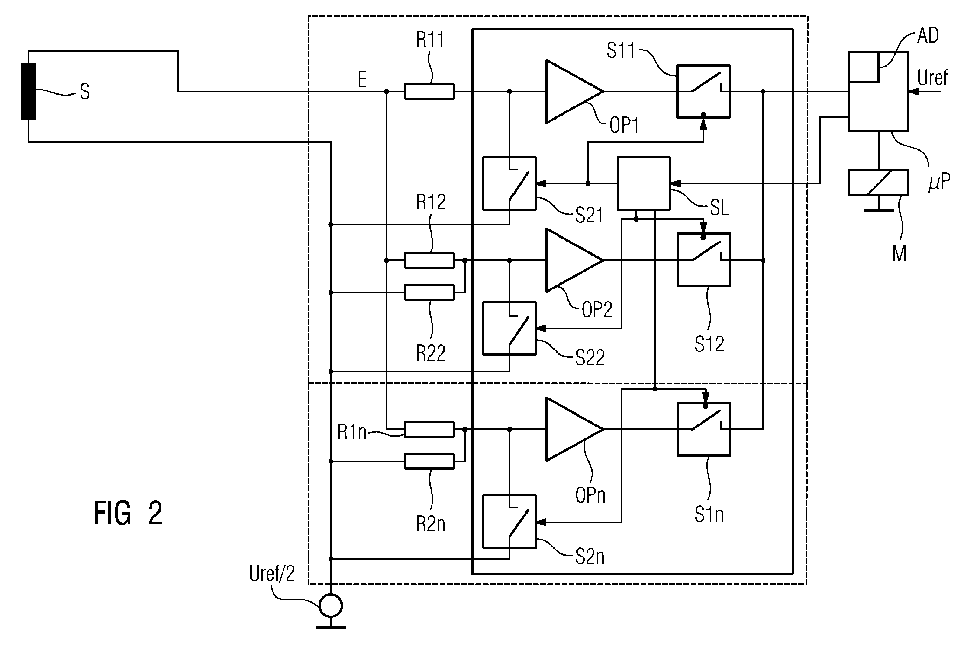

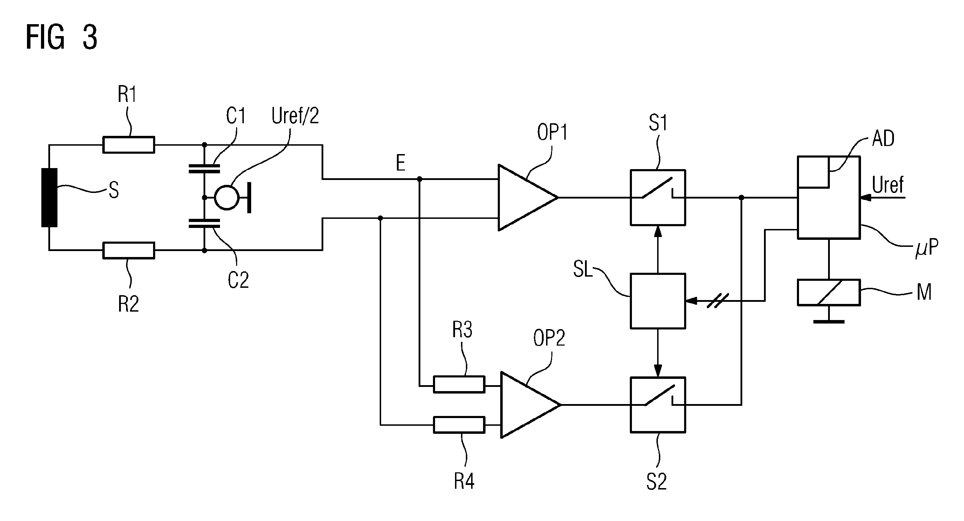

Die Figuren 1 und 2 zeigen die erfindungsgemäße Schaltungsanordnung im Vergleich mit einer in Figur 3 dargestellten bisher bekannten Lösung. Nach allen in den Figuren 1 bis 3 gezeigten Varianten dient zur Stromerfassung in einem überwachten Netz ein Stromsensor in Form einer Rogowskispule S. Gezeigt ist jeweils nur die Schaltung für eine Phase. Das Signal der Rogowskispule S wird gemäß Figur 3 symmetrisch über Widerstände R1, R2 und Kondensatoren C1, C2 an Operationsverstärker OP1, OP2 übertragen. Die Symmetrie wird durch Anlenken des Verbindungspunktes zwischen den Kondensatoren C1, C2 an das Potential der halben Referenzspannung Uref/2 gehalten, die die maximale Aussteuerung aller beteiligten Verstärker sowie eines A/D-Wandlers AD im Mikroprozessor µP bestimmt. Der Mikroprozessor µP wertet das Stromsignal aus und entscheidet über eine eventuelle Abschaltung des Leistungsschalters durch einen Auslösemagneten M.

Die Operationsverstärker OP1, OP2 sind eingangsseitig (Punkt E) parallel geschaltet. Der Verstärkungsfaktor des Operationsverstärkers OP2 ist gegenüber dem des Operationsverstärkers OP1 durch Vorschalten von Widerständen R3, R4 herabgesetzt und beträgt beispielsweise den halben Wert des Operationsverstärkers OP1. Die Operationsverstärker OP1, OP2 lassen sich über Schalter S1, S2 auf den Mikroprozessor µP schalten. Anfänglich ist der Schalter S2 geschlossen, so dass eine minimale Verstärkung durch den Operationsverstärker OP2 erfolgt. Anhand des Stromsignals kann der Mikroprozessor µP den Operationsverstärker OP1 beibehalten oder den Operationsverstärker OP2 auswählen und über eine Schaltlogik SL auf den Schalter S1 umschalten.

Wie eingangs beschrieben, benötigt ein übersteuerter Operationsverstärker OPn eine Erholzeit. In der Schaltungsanordnung nach Figur 1 sind deshalb neben den Schaltern S11...S1n, die den Schaltern S1, S2 in Figur 3 entsprechen, weitere Schalter S21...S2n vorgesehen, mit denen alle Operationsverstärker OP1...OPn, deren Ausgangssignal aktuell nicht auf den Mikroprozessor µP aufgeschaltet ist (entsprechende Schalter S11...S1n geöffnet), eingangsseitig an das Potential der halben Referenzspannung Uref/2 gelegt werden. Zu hohe Eingangspegel an den Operationsverstärkern OP1...OPn werden somit sofort unterdrückt und die Erholzeit verkürzt. Anfänglich ist der Schalter Sn geschlossen, so dass eine minimale Verstärkung durch den Operationsverstärker OPn gewählt ist. Der Mikroprozessor µP kann nun anhand des Stromsignals den optimalen Operationsverstärker OP(n-1) für die eigentliche Messung auswählen und ansteuern. Im Mikroprozessor µP wird der Verstärkungsgrad im Vergleich mit der Referenzspannung Uref bei der Berechnung eines Stromwertes berücksichtigt.

Der Unterschied zwischen den Ausführungsbeispielen nach Figur 1 und Figur 2 besteht lediglich darin, dass nach der Lösung gemäß Figur 1 ein symmetrischer Anschluss der Rogowskispule S an einen als Vorverstärker V wirkenden Differenzverstärker vorliegt, während nach der Lösung gemäß Figur 2 das Signal der Rogowskispule S direkt an die Operationsverstärker OP1...OPn geführt ist.

Zur Einstellung des Verstärkungsgrades sind Widerstände R11...R1n, R22...R2n vorgesehen. Die Spannungsteilung über die Widerstände R11...R1n, R22...R2n sollte so dimensioniert werden, dass die durch das Schalten der Schalter S21...S2n bewirkte Widerstandsänderung am Punkt E bei allen Spannungsteilern gleich ist. In diesem Fall ergeben sich beim Umschalten der Schalter S21...S2n keine Belastungssprünge für den Vorverstärker V beziehungsweise die Rogowskispule S.

Die Operationsverstärker OP1...OPn sowie die Schalter S11...S1n und S21...S2n als auch die Widerstände R11...R1n, R22...R2n lassen sich in einen ASIC integrieren, wie durch die gestrichelt gezeichnete Umrandung dieser Bauelemente angedeutet ist.

### Bezugszeichenliste

- S: Rogowskispule
- R1, R2: Widerstand
- C1, C2: Kondensator
- OP1, OP2...OPn: Operationsverstärker
- Uref/2: Referenzspannung
- AD: A/D-Wandler
- µP: Mikroprozessor
- M: Auslösemagnet
- S1, S2: Schalter
- SL: Schaltlogik
- S11...S1n: Schalter
- S2...S2n: Schalter
- V: Vorverstärker
- R11...R1n: Widerstände
- R22...R2n: Widerstände
- E: Punkt (Eingang)

## Patentansprüche

1. Verfahren zur Verstärkung der Eingangssignale eines elektronischen Überstromauslösers von Niederspannungs-Leistungsschaltern mit mehreren Operationsverstärkern unterschiedlichen Verstärkungsgrades und in Höhe einer Referenzspannung begrenztem Aussteuerungsgrad, von deren Ausgängen jeweils einer wahlweise in Abhängigkeit vom Ausgangspegel der Operationsverstärker auf die Auslöseeinheit des Überspannungsauslösers geschaltet wird,
**dadurch gekennzeichnet , dass**
die Eingänge aller übrigen Operationsverstärker jeweils auf das Potential der halben Referenzspannung (Uref/2) geschaltet werden.

2. Schaltungsanordnung zur Verstärkung der Eingangssignale eines elektronischen Überstromauslösers von Niederspannungs-Leistungsschaltern mit mehreren Operationsverstärkern unterschiedlichen Verstärkungsgrades und in Höhe einer Referenzspannung begrenztem Aussteuerungsgrad, deren Ausgänge über jeweils einen Schalter an die Auslöseeinheit des Überspannungsauslösers geführt sind, wobei in Abhängigkeit vom Ausgangspegel der Operationsverstärker von der Auslöseeinheit jeweils ein Schalter geschlossen wird, zur Durchführung des Verfahrens nach Anspruch 1,
**dadurch gekennzeichnet , dass**
die Eingänge der Operationsverstärker (OP1...OPn) über von der Auslöseeinheit (µP) betätigbare zweite Schalter (S21...S2n) an das Potential der halben Referenzspannung (Uref/2) schaltbar sind.

3. Schaltungsanordnung nach Anspruch 2,
**dadurch gekennzeichnet , dass**
das Eingangssignal den Operationsverstärkern (OP1...OPn) jeweils über einen Spannungsteiler (R11...R1n, R22...R2n) zugeführt ist.

4. Schaltungsanordnung nach Anspruch 3,
**dadurch gekennzeichnet , dass**
die Spannungsteiler (R11...R1n, R22...R2n) so dimensioniert sind, dass die durch das Schalten der zweiten Schalter (S21...S2n) bewirkte Widerstandsänderung am Eingangspunkt (E) des Eingangssignals bei allen Spannungsteilern (R11...R1n, R22...R2n) gleich ist.

5. Schaltungsanordnung nach einem der Ansprüche 2 bis 4,
**dadurch gekennzeichnet**,
**dadurch gekennzeichnet , dass**
die Operationsverstärker (OP1...OPn), die Schalter (S11...S1n), die zweiten Schalter (S21...S2n) und die Widerstände (R11...R1n, R22...R2n) der Spannungsteiler in einem ASIC integriert sind.
